Europäisches Patentamt-

European Patent Office

Office européen des brevets

(11) Veröffentlichungsnummer: **0 192 929**
**A1**

(12) **EUROPÄISCHE PATENTANMELDUNG**

(21) Anmeldenummer: **86100161.8**

(22) Anmeldetag: **08.01.86**

(51) Int. Cl.⁴: **G06F 15/18** , G06K 15/10

(30) Priorität: **07.02.85 DE 3504230**

(43) Veröffentlichungstag der Anmeldung:
**03.09.86 Patentblatt 86/36**

(84) Benannte Vertragsstaaten:
**CH DE FR GB IT LI ·NL SE**

(71) Anmelder: **Siemens Aktiengesellschaft Berlin und München**
**Wittelsbacherplatz 2**
**D-8000 München 2(DE)**

(72) Erfinder: **Nooss, Wolfgang**
**Kandinskystrasse 27**
**D-8000 München 71(DE)**

(54) **Anordnung zum selbsttätigen Ermitteln von Reaktionen in Abhängigkeit von Situationen.**

(57) Zum selbsttätigen Ermitteln von Reaktionen, die durch einen numerischen Reaktionswert (r) dargestellt werden in Abhängigkeit von durch numerische Variablen ($s_i$) dargestellten Situationen, werden die Variablen ($s_i$) mit anpaßbaren Koeffizienten ($c_j$) verknüpft. Während einer Lernphase werden die Koeffizienten ($c_j$) durch numerische Optimierung solange eingestellt, bis sie in Abhängigkeit von einigen ausgewählten Situationen geeignete Reaktionen ermitteln. Während einer Kannphase bleiben die Koeffizienten ($c_j$) unverändert und in Abhängigkeit von beliebigen ähnlichen Situationen werden entsprechende Reaktionen ermittelt. Die Koeffizienten ($c_j$) können auch von der Rechenanlage, in der sie ermittelt wurden, in eine andere Anordnung transplantiert werden, um dort bei ähnlichen Situationen die geeigneten Reaktionen auszulösen. Dabei wird künstliche Intelligenz in der Rechenanlage zentral erzeugt und für die Ermittlung der geeigneten Reaktionen dezentral benutzt.

FIG 1

Anordnung zum selbsttätigen Ermitteln von Reaktionen in Abhängigkeit von Situationen

Die Erfindung bezieht sich auf ein Verfahren zum selbsttätigen Ermitteln von Reaktionen in Abhängigkeit von Situationen gemäß dem Oberbegriff des Patentanspruchs 1.

Unter Verwendung einer Rechenanlage ist es möglich, für verschiedene Situationen, die durch numerische Variablen dargestellt werden, bestimmte Reaktionen, die durch numerische Reaktionswerte dargestellt werden, selbsttätig zu ermitteln. Im einfachsten Fall ist ein Zuordner, entsprechend einem Umcodierer vorhanden, der beim Anlegen einer bestimmten Variablen einen bestimmten Reaktionswert ausgibt. In diesem Fall ist es jedoch erforderlich, daß die Zuordnung zwischen den Reaktionswerten und den Variablen vollständig beschrieben ist. Ein derartiges Verfahren würde versagen, wenn eine unbekannte Variable angelegt wird und eine bestimmte Reaktion erwartet wird.

Der Erfindung liegt daher die Aufgabe zugrunde, ein Verfahren anzugeben, das es ermöglicht, selbsttätig geeignete Reaktionen in Abhängigkeit von Situationen auch dann zu ermitteln, wenn die Situationen unbekannt sind.

Erfindungsgemäß wird die Aufgabe bei dem Verfahren der eingangs genannten Art durch die im kennzeichnenden Teil des Patentanspruchs 1 angegebenen Merkmale gelöst. Dazu wird ein Umcodierer aus einem Satz anpaßbarer Koeffizienten eingeführt.

Die Koeffizientenwerte, die während einer Lernphase ermittelt werden, können als intelligente Koeffizienten bezeichnet werden, denn in ihnen ist der Erfolg während des Lernens enthalten, wobei hier unter dem Wort Lernen in erster Linie der Fortschritt durch Versuch und Irrtum in der Rechenanlage verstanden wird. Die Lernphase wird von der numerischen Optimierung des Satzes von Koeffizienten beherrscht, während die Koeffizienten in der Kannphase konstant bleiben und Reaktionen direkt aus Situationen berechnen.

Das Verfahren ist allgemein anwendbar, wenn eine beliebige Situation zwanglos als ein Satz von Variablen mit beliebigen Werten aufgefaßt und angedrückt wird. Diese Variablen werden dann mit den Koeffizienten arithmetisch verknüpft und in einen Reaktionswert übergeführt.

Das Verfahren gemäß der Erfindung hat den Vorteil, daß in kurzer Zeit beliebigen ähnlichen Situationen geeignete Reaktionen zugeordnet werden, da kein Vorrat nach Muster-Situationen zu durchsuchen ist. Die Bearbeitung während der Lernphase darf lange dauern, denn es kommt lediglich darauf an, daß die Bearbeitung während der Kannphase möglichst kurz ist. Die Sollreaktionen, auf die sich die Koeffizienten einlernen, müssen nicht analytisch beschreibbar sein, also in der Rechenanlage entstehen und durch Berechnung bewertet werden. Sie können auch zusammen mit den Situationen als eine Liste außerhalb der Rechenanlage mit menschlicher (natürlicher) Intelligenz erarbeitet und für die Lernphase in der Rechenanlage vorgegeben werden. Das Verfahren ist überall dort einsetzbar, wo ein Gerät oder eine Maschine passend und schnell auf wechselnde Situationen, die sich nicht erschöpfend vorausprogrammieren lassen, reagieren soll.

Das Verfahren kann beispielsweise in vorteilhafter Weise für die Codierung von Zeichen in einem Zeichengenerator eines Matrixdruckers verwendet werden. Hierzu werden in der Lernphase die Koeffizienten bei der Codierung einer kleinen Untermenge von Zeichen eines bestimmten Stils ermittelt. Anschließend kann in der Kannphase die Codierung beliebiger Zeichen dieses Stils selbsttätig ablaufen.

Das Verfahren gemäß der Erfindung wird im folgenden anhand von Zeichnungen näher erläutert. Es zeigen

Fig. 1a bis d ein auf unterschiedliche Weise codierbares Zeichen für einen Matrixdrucker,

Fig. 2 die Wirkungsweise des Verfahrens am Beispiel von drei aus $10^9$ verschiedenen Situationen,

Fig. 3 eine Darstellung des Einflusses einzelner Koeffizienten auf die Codierqualität.

Bei einer Codierung von mittels eines Matrixdruckers darstellbaren Zeichen in einem Zeichengenerator wäre es denkbar, für jeden vom Druckkopf zu druckenden Punkt einen Binärwert 1 und für jeden unbesetzten Punkt einen Binärwert 0 in dem Zeichengenerator vorzusehen. Bei einem Zeichensatz von sehr vielen Zeichen einer bestimmten Schriftart würde dies für den Zeichengenerator einen großen Speicherbedarf bedeuten. Es ist daher erforderlich, die Codierung des Zeichens im Zeichengenerator, der üblicherweise als Festwertspeicher ausgebildet ist, mit möglichst geringem Speicherplatz durchzuführen.

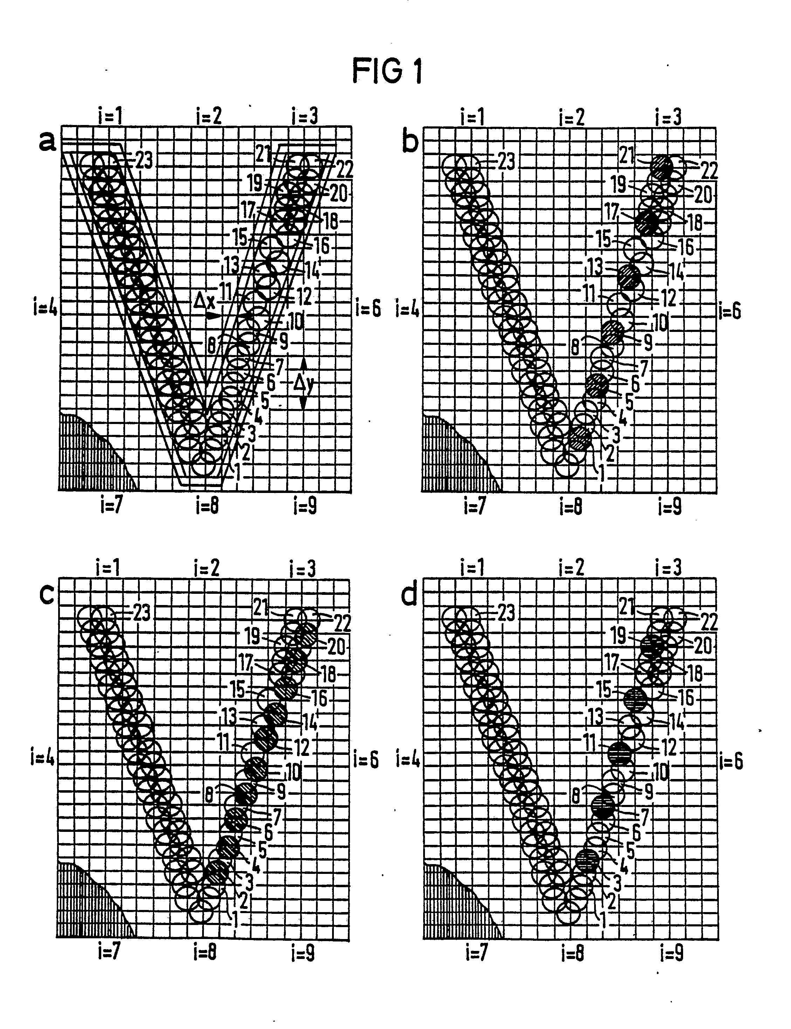

Bei der Codierung eines abzuspeichernden Zeichens wird üblicherweise derart vorgegangen, daß die Umrisse des Zeichen dargestellt werden und dann die Umrisse mit Matrixpunkten bestmöglich ausgefüllt werden, wobei die Eigenschaften des Matrixdruckers, wie beispielsweise die Anzahl der Druckelemente des Druckkopfs und die mögliche Schrittweite sowie die Möglichkeiten der Positionierung des Druckkopfs in horizontaler Richtung und sogar das Tintenfließverhalten am Papier bestmöglich berücksichtigt werden. Bei der Darstellung in Fig. 1 ist beispielsweise bei a der Umriß eines Zeichens V gezeigt, der durch eine Vielzahl von Punkten ausgefüllt wurde. Jede Zeile des in Fig. 1a dargestellten Rasters ist der Bewegung eines Druckelements relativ zum Aufzeichnungsträger zugeordnet und die Darstellung der Zeichen erfolgt beispielsweise unter Verwendung von 32 Druckelementen. Die vertikalen Linien stellen Ganzschritte dar, jedoch können die Druckpunkte in horizontaler Richtung auch in Teilschritten dieser Ganzschritte dargestellt werden.

Für die Codierung des Zeichens besteht, wie bereits erwähnt, die Möglichkeit für jede mögliche Druckposition innerhalb des Zeichenplatzes ein Bit vorzusehen, wobei immer dann, wenn das Bit den Binärwert 1 aufweist, ein Punkt gedruckt wird und die freien Stellen jeweils durch den Binärwert 0 gekennzeichnet werden. Es erweist sich jedoch als zweckmäßiger, ein aus der DE-OS 31 32 842 bekanntes sogenanntes Differenzkoordinatenverfahren zu verwenden, bei dem es möglich ist, die Koordinatendifferenzen x, y zwischen aufeinanderfolgenden Punkten einer Kette zu speichern. Aufeinanderfolgende Punkte müssen allerdings nicht benachbarte sein, und ein Kettenelement kann als ein Paar beliebiger, aber nicht allzuweit entfernter Punkte definiert werden. Im Drucker gibt es die Möglichkeit, sich wiederholende Kettenelemente nur einmal zu speichern zusammen mit der Anzahl der Wiederholungen. Außerdem paßt ein Paar kurzer Kettenelemente in eine einzige Speicherzelle, aber Sprünge zu weit entfernten Punkten sind zulässig. Bei der Codierung der Zeichen unter Verwendung dieses Differenzkoordinatenverfahrens müssen jeweils drei Fragen entschieden werden, nämlich mit welchem Punkt wird am besten begonnen, beispielsweise mit dem Punkt 1, 2 oder 3 in Fig. 1a. Außerdem muß die Frage geklär werden, mit welchem Punkt man in gleichen Schritten gleicher Richtung am besten fortfährt. Dies ist beispielsweise möglich, wie es in Fig. 1b dargestellt ist, mit den Punkten 1, 5, 9, ... 21, wenn mit dem Punkt 1 begonnen wird. Es ist auch möglich, wie es in Fig. 1c dargestellt ist, mit dem Punkt 2 zu beginnen und mit kürzeren Schritten außer dem Punkt 2 auch die Punkte 4, 6, 8, ... 20 zu erfassen oder, wie es in Fig. 1d dargestellt ist, beginnend mit dem Punkt 3 mit größeren Schritten die Punkte 7, 11, ... 19 zu erfassen. Schließlich ist die Frage zu klären, zu welchem Punkt am besten gesprungen wird, wenn kein nahegelegener Punkt mehr für ein Kettenelement verfügbar ist. Dies kann beispielsweise der Punkt 22 oder 23 oder ein Nachbar des Punktes 1 sein.

Ein Mensch braucht ein paar Tage zur Kompression eines Zeichensatzes, wenn er diese drei Fragen in jeder Situation beantworten muß. Da viele Sätze verschiedener Zeichenstile zu komprimieren sind, liegt es nahe, diese Kompression selbsttätig in ein paar Minuten pro Zeichensatz erledigen zu lassen.

Da es einen sehr großen Aufwand bedeuten würde, alle Reaktionen bei der Codierung der Zeichen in Abhängigkeit von den Positionen der Punkte erschöpfend vorauszuprogrammieren, ist es zweckmäßig, unter Erzeugung von künstlicher Intelligenz einer Rechenanlage die entsprechenden Schritte bei der .Codierung der zeichen aufgrund der jeweiligen Positionen der Punkte selbsttätig ermitteln zu lassen. Das Verfahren gemäß der Erfindung ist jedoch nicht auf die Codierung von Zeichen beschränkt, sondern kann überall dort eingesetzt werden, wo ein Gerät oder eine Maschine passend und schnell auf wechselnde Situationen, die sich nicht erschöpfend vorausprogrammieren lassen, reagieren soll.

Bei der Codierung des in Fig. 1a dargestellten Zeichens wurde die Zeichenmatrix in $i = 1...9$ gleichgroße Untermatrizen eingeteilt, die in Fig. 1a durch starke Linien gekennzeichnet sind. Sie dienen hier dazu, die Vielfalt der möglichen Situationen zu reduzieren. Allgemein läßt sich die Gesamtheit von $k^n$ möglichen Situationen als Satz von n Variablen $s_i$ mit Werten zwischen 1 und k beschreiben. Hier drücken eine Situation, also das individuelle Bild eines Zeichens, $n = 9$ ganzzahlige Variablen $s_i$ aus. Die Zahlenwerte der Variablen $s_i$ besagen, wie viele Punkte quantisiert auf die neun Untermatrizen entfallen. Durch Multiplikation mit einem Skalenfaktor wird erreicht, daß die Werte der Variablen $s_i$ nur zwischen $k = 1$ und $k = 10$ schwanken:

$$s_1 = 1...k, \ s_2 = 1...k, \ ..., \ s_n = 1...k$$

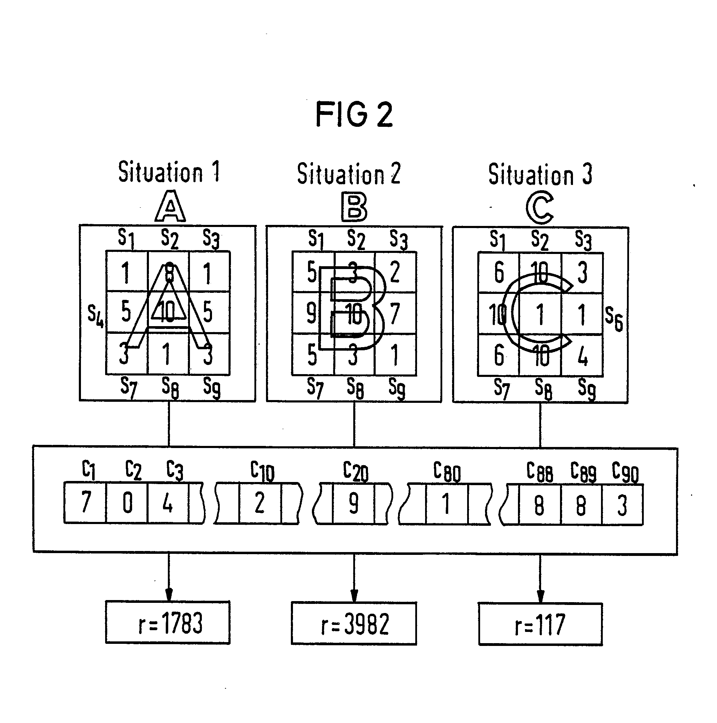

Das ist die relative Punktdichte in den n Untermatrizen. Beim großen A z. B. ist die größe Punktdichte $s_5 = 10$ im Zentrum, wo die drei Striche sich begegnen (Fig. 2).

Wie die zehn Ziffern 0 bis 9 des Dezimalsystems lassen sich nun die Werte der neun Variablen $s_i$ mit k multiplizieren, wenn dieser zu den Potenzen 0 bis $n-1 = 8$ erhoben wird:

$$v = (s_1-1)k^0 + (s_2-1)k^1 + ... + (s_n-1)k^{n-1} = 0...k^n-1$$

Der Zahlenwert von v erlaubt die eindeutige Unterscheidung der ganzen Vielfalt von $k^n$ möglichen Situationen. Zum Berechnen jeder beliebigen Reaktion aus jeder beliebigen Situation dient beim Druckerproblem eine Menge von $k \times n = 90$ ganzzahligen Koeffizienten $c_j$ zwischen 0 und 9. Der Koeffizient $c_j$ mit der laufenden Nummer j ist der Variablen $s_i$ für die Untermatrizen $i = 1$ bis n zugeordnet:

$$j_i = s_i + k(i-1) = 1...kn$$

Für jede der $n = 9$ Variablen $s_i$ ist also eine Folge von $k = 10$ Koeffizienten reserviert und einer von ihnen ist dem aktuellen Wert der Variablen $s_i$ zugeordnet. Die Koeffizienten $c_j$ modifizieren oder verzerren die Variablen $s_i$ und liefern

$$s_i' = s_i + fc_j = 1...k,$$

wobei k subtrahiert wird, sobald $s_i$ die Schwelle k überschreitet. Hierbei liegt die Idee zugrunde, das System zur Änderung jedes möglichen Zahlenwerts $s_i$ zwischen 1 und k in jeden anderen Zahlenwert $s_i'$ zwischen 1 und k zu befähigen und so jede gewünschte Reaktion r aus jeder möglichen Situation erhalten zu können, also die Funktion $r(s_i, c_j)$. In extrem vereinfachter Weise ist die Aufgabe der Koeffizienten ähnlich der von Nervenzellen, die in einem Organismus gespeicherte Informationselemente untereinander in jede beliebige Verbindung bringen können sollen. Die Koeffizienten müssen dazu nicht ganzzahlig sein oder zwischen 0 und 9 liegen. Der Faktor $f = k/10$ ist in unserem Fall gleich 1, weil $k = 10$ und $c_{max} = 9$ gewählt wird.

In dieser Anordnung können die Koeffizienten nun entscheiden, indem sie einfach die Nummer einer Reaktion

$$r = 1 + (s_1'-1)k^0 + (s_2'-1)k^1 + ... + (s_n'-1)k^{n-1} = 1...r_{max}$$

auswählen. Diese Gleichung ist in der Lage, $k^n$ verschiedene Reaktionen für $k^n$ verschiedene Situationen zu berechnen. Der Unterschied zwischen der Anzahl so vieler möglicher Situationen und der von nur $k \times n$ Koeffizienten verkörpert das Prinzip von Wendigkeit auf Kosten mathematischer Exaktheit: Mit der großen Zahl von $k^n$ Koeffizienten ließe sich nichts aus einer Situation für eine ähnliche erlernen, weil dann jeder Situation ein eigener, neuer Koeffizient zugeordnet wäre. Tatsächlich gibt es insgesamt nur $r_{max}$ Reaktionen. Sobald r die Zahl von beispielsweise $r_{max} = 4000$ Reaktionen überschreitet, wird deshalb dieser Betrag abgezogen.

Bei der Darstellung in Fig. 2 ist das Verfahren am Beispiel von drei verschiedenen aus $10^9$ möglichen Situationen dargestellt, die beispielsweise bei der Codierung der Buchstaben A, B und C auftreten. Jedes Zeichen wird an den Zahlenwerten seiner neun Untermatrizen erkannt. Anschließend werden die Zahlenwerte der Untermatrizen $s_1$ bis $s_9$ mit den Koeffizienten $c_1$ bis $c_{90}$ verknüpft, die beispielsweise die in der Fig. 2 dargestellten Zahlenwerte aufweisen. Wenn die Variablen $s_1$ bis $s_9$, die das Zeichen A signalisieren, mit den Koeffizienten $c_1$ bis $c_{90}$ verknüpft werden, ergibt sich z. B. als Reaktion der Zahlenwert 1783, wobei die Zahl 1 bedeutet, daß alle vier möglichen Kettenelemente zugelassen sind, daß die Codierung des Zeichens bei einem Punkt begonnen wird, der bei 83 % der abgewickelten Zeichenlänge, also am rechten Ende des Zeichens liegt und daß Sprünge zu Punkten im letzten Drittel bei 70 % der abgewickelten Zeichenlänge auszuführen sind. Hierbei wird davon ausgegangen, daß die Koeffizienten $c_1$ bis $c_{90}$ in der Lernphase optimal ermittelt wurden und nun konstant sind, um mit den verschiedenen Zeichen zugeordneten Variablen $s_1$ bis $s_9$ verknüpft zu werden. Unter der abgewickelten Zeichenlänge verstehen sich hier die aneinandergereihten Punkte innerhalb der Spalten eines Zeichenfeldes, wobei beispielsweise die Punkte beginnend von oben nach unten und von links nach rechts in dem Zeichenfeld, wie es in Fig. 1a dargestellt ist, aneinandergereiht werden.

Während der Lernphase werden die Koeffizienten $c_1$ bis $c_{90}$ mittels eines numerischen Optimierungsverfahrens ermittelt. Je nach Verfahren beginnt man z. B. mit einem Satz von Zufallszahlen und sucht dann nach dem Minimum der Zielfunktion. Im vorliegenden Fall wird die Gesamtzahl der Speicherzellen, die für die Codierung des Zeichens erforderlich sind, zum Zielfunktionswert erklärt. Eine kleine Untermenge der Zeichen eines bestimmten Stils werden zum Lernen herausgegriffen. Die Rechenanlage wird derart programmiert, daß die Koordinaten eines jeden Zeichens nach derjenigen Strategie codiert werden, die die aktuellen Koeffizientenwerte gerade auswählen, nachdem sie soeben vom Optimierungsprogramm variiert wurden. Die Gesamtzahl der Speicherzellen für die Codierung des Zeichens muß dabei möglichst klein sein.

In der Lernphase müssen nicht alle $kxn$ Koeffizienten angesprochen werden. Die anderen Koeffizienten sorgen für die nötige Flexibilität bei der Bewältigung unbekannter Situationen in der Kannphase. Das Verfahren ordnet ihnen solche Werte zu, daß die Reaktion um bekannte Situationen herum konstant bleibt.

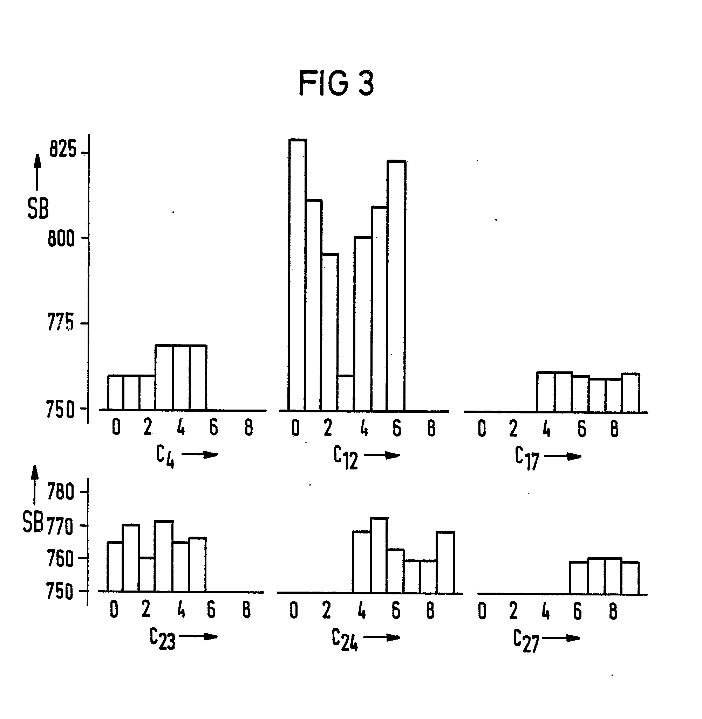

Bei der Darstellung in Fig. 3 sind die letzten Schritte eines Lernprozesses anhand einiger Schnitte im Optimum der Zielfunktion verdeutlicht. In horizontaler Richtung sind jeweils die Zahlenwerte einiger ausgewählter Koeffizienten $c_j$ dargestellt und in vertikaler Richtung ist der Speicherbedarf SB dargestellt. Es wurde dort jeweils nur ein Koeffizient variiert, während die übrigen auf ihren Optimalwerten konstant gehalten sind. Wie aus Fig. 3 zu ersehen ist, haben einige Koeffizienten wenig Einfluß auf die Codierqualität, also auf die Anzahl der nötigen Speicherzellen, während andere drastische Änderungen auslösen, wie es beispielsweise beim Zahlenwert 3 des Koeffizienten $c_{12}$ zu erkennen ist. Der Lernprozeß ergaben z. B. $c_{12}=3$, $c_{23}=2$ als Optimalwerte.

Die Ermittlung der Koeffizienten in der Lernphase dauert sehr lange im Vergleich zur Ermittlung einer Reaktion in der Kannphase. Es ist möglich, der Rechenanlage nach der Lernphase die angepaßten Koeffizienten zu entnehmen und in ein anderes Gerät oder eine andere Maschine zu transplantieren, so daß dort in der Kannphase unabhängig von der Rechenanlage entsprechende Codierungen individuell gestalteter Zeichen desselben Zeichenstils selbsttätig ablaufen können.

Es ist auch möglich, unter Verwendung des Verfahrens die Schriftzeichenumrisse mit Punkten zu besetzen, wie es in Fig. 1a dargestellt ist. Zu diesem Zweck läßt sich beispielsweise die Intelligenz des Schriftengestalters, der diese Umrisse bei einigen Zeichen ausfüllte, anzapfen, da bereits die Situation, nämlich die Umrisse und die entsprechenden Reak-tionen, also die Anordnung der Punkte, vorhanden sind. Zur Ermittlung der Koeffizienten kann ein Fenster über jede Zeichenmatrix hinweg bewegt werden, und die Koeffizienten werden solche Zahlenwerte annehmen, daß sie die entsprechende Umrißsituation im Fenster der Anordnung der Punkte des Schriftengestalters im Fenster zuordnen. Danach kann mit ihnen eine große Vielfalt von Zeichenstilen für Drucker in kurzer Zeit zu niedrigen Kosten erzeugt werden, und zwar selbsttätig unter Berücksichtigung besonderer Eigenschaften des Druckers.

Es ist auch möglich für eine Mehrzahl von Schriftvarianten, wie Schönschrift, Schnellschrift, Engschrift, Breitschrift usw. die Skelettlinien aller Zeichen nur einmal in Koordinatenform zu speichern und außerhalb des Druckers Koeffizienten zu bestimmen, die die Skelettlinien mit Punkten besetzen. In diesem Fall wäre ein Koeffizientensatz für Schönschrift, einer für Schnellschrift usw. erforderlich. Dies hat den Vorteil, daß nur ein geringer Speicherplatz erforderlich ist, denn die Skelettlinien und die Koeffizienten brauchen weniger Speicherplatz als eine entsprechende Anzahl vo Zeichengeneratoren oder ein gemeinsamer Zeichengenera tor. Außerdem wird die Schriftvielfalt mit geringem Aufwan erhöht.

Wie bereits erwähnt, eignet sich das Verfahren fü eine Vielzahl von Anwendungen. Beispielsweise ist e möglich, eine Sprach-oder Mustererkennung durchzuführer wenn in der Lernphase die Koeffizienten im Hinblick au eine Auswahl von bekannten Lauten oder Mustern optimie werden. In der Kannphase ist es dann möglich, beliebig ähnliche Laute oder Muster zu erkennen.

## Ansprüche

1. Verfahren zum selbsttätigen Ermitteln von Reaktionen i Abhängigkeit von Situationen, bei dem die Reaktione durch numerische Reaktionswerte dargestellt werden, b dem die Situationen durch Variable dargestellt werden un bei dem zur Ermittlung einer Reaktion in Abhängigkeit vo einer Situation eine Rechenanlage verwendet wird **dadurch gekennzeichnet,** daß während einer Lernphas durch eine numerische Optimierung der durch die Reak tionswerte $(r)$ dargestellten Reaktionen in Abhängigkeit vo den durch Variablen $(s_i)$ dargestellten Situationen mit de Variablen $(s_i)$ arithmetisch verknüpfte anpaßbare Koeffizie ntenwerte $(c_j)$ ermittelt werden und daß in der Kannphas die Koeffizientenwerte $(c_j)$ unverändert bleiben und mit be liebigen ähnlichen Situationen zugeordneten Variablen $(s$ verknüpft werden, um passende Reaktionen zu erzeugen.

2. Verfahren nach Anspruch 1, **dadurch gekennzeichne** daß die während der Lernphase von der Rechenanlag ermittelten Koeffizientenwerte $(c_j)$ in eine Verarbeitungsein heit außerhalb der Rechenanlage einlesbar sind und dort i Abhängigkeit von beliebigen ähnlichen Situationen zugeord neten Variablen $(s_i)$ passende numerische Reaktionswert $(r)$ ermitteln.

3. Verfahren nach Anspruch 1 oder Anspruch 2, **dadurc gekennzeichnet,** daß eine Gesamtheit von $k^n$ mögliche Ausgangssituationen als Satz von n Variablen $s_i$ mit Wer ten zwischen 1 und k ausgedrückt werden und daß di Variablen $(s_i)$ durch Koeffizienten $(c_j)$ zwischen 0 und k- verändert werden, wobei j durch die Gleichung

$$j_i = s_i + k(i-1) = 1...kn$$

festgelegt wird, so daß sich die modifizierten Variablen

$$s_i{}^1 = s_i + fc_j = 1...k$$

ergeben, wobei $f = k(c_{max}+1)$ ist, und daß sich als Reaktior

$$r = 1 + (s_1{}^1-1)k_0 + (s_2{}^1-1)k^1 + ... + (s_n{}^1-1)k = {}^{n-1} = 1...r_{max} ergibt$$

4. Verfahren nach einem der Ansprüche 1 bis 3, **dadurc gekennzeichnet**, daß bei einer Codierung der Punkt eines von einem Matrixdrucker darzustellenden Zeiche eine mit den Punkten versehene Zeichenmatrix in n Unter matrizen aufgeteilt wird, daß jeder Untermatrix ein Wert zwi schen 1 und k zugeordnet wird, der die Variable $(s_i)$ da stellt, daß während einer Lernphase anhand von einige Zeichen als Ergebniswert $(r)$ eine optimale Codierung durc Veränderung der Koeffizientenwerte $(c_j)$ ermittelt wird un daß anschließend in der Kannphase die Koeffizientenwert $(c_j)$ unverändert bleiben und für beliebige ähnliche Zeiche die optimalen Reaktionen durch Verknüpfung der Variable

(s$_i$) mit den Koeffizientenwerten (c$_j$) ermittelt werden.

5. Verfahren nach einem der Ansprüche 1 bis 3, **dadurch gekennzeichnet** , daß während einer Lernphase vorgegebenen Umrissen von Zeichen als Situationen vorgegebene Punkte als Reaktionswerte (r) unter Verwendung der Koeffizienten (c$_j$) zugeordnet werden und daß während der Kannphase bei konstanten Koeffizientenwerten (c$_j$) für beliebige ähnliche Umrisse die Positionen der Punkte selbsttätig passend ermittelt werden.

FIG 1

# FIG 2

| Situation 1 | Situation 2 | Situation 3 |
|:---:|:---:|:---:|
| A | B | C |

Situation 1 — grid:

| | $S_1$ | $S_2$ | $S_3$ | |
|---|---|---|---|---|
| | 1 | 8 | 1 | |
| $S_4$ | 5 | 10 | 5 | |
| | 3 | 1 | 3 | |
| | $S_7$ | $S_8$ | $S_9$ | |

Situation 2 — grid:

| | $S_1$ | $S_2$ | $S_3$ | |
|---|---|---|---|---|
| | 5 | 3 | 2 | |
| | 9 | 10 | 7 | |
| | 5 | 3 | 1 | |
| | $S_7$ | $S_8$ | $S_9$ | |

Situation 3 — grid:

| | $S_1$ | $S_2$ | $S_3$ | |
|---|---|---|---|---|
| | 6 | 10 | 3 | |
| | 10 | 1 | 1 | $S_6$ |
| | 6 | 10 | 4 | |
| | $S_7$ | $S_8$ | $S_9$ | |

| $C_1$ | $C_2$ | $C_3$ | | $C_{10}$ | | $C_{20}$ | | $C_{80}$ | | $C_{88}$ | $C_{89}$ | $C_{90}$ |
|---|---|---|---|---|---|---|---|---|---|---|---|---|
| 7 | 0 | 4 | | 2 | | 9 | | 1 | | 8 | 8 | 3 |

| r = 1783 | r = 3982 | r = 117 |
|:---:|:---:|:---:|

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 011 685 (STANDARD TELEPHONES AND CABLES LTD.) * Seite 24, Zeilen 49-71 * | 1 | G 06 F 15/18 G 06 K 15/10 |
| Y | --- | 2 | |
| Y | EP-A-0 056 948 (LICENTIA PATENTS-VERWALTUNGS GmbH) * Seite 9, Zeile 13 - Seite 10, Zeile 10 * --- | 2 | |
| A | IBM TECHNICAL DISCLOSURE BULLETIN, Band 14, Nr. 4, September 1971, Seiten 1305-1311, New York, US; H. KOBAYASKI: "Adaptive data compression scheme" * Insgesamt * --- | 1 | |
| A | K. STEINBUCH et al.: "Neuere Ergebnisse der Kybernetik", 1964, Seiten 313-325, R. Oldenburg Verlag, München, DE; P. MÜLLER: "Lernmatrix für nichtbinäre Signale" * Seite 313 - Seite 316, Zeile 16 * --- | 1 | RECHERCHIERTE SACHGEBIETE (Int. Cl.4) G 06 F G 06 K |
| A | US-A-3 317 900 (CLAPPER) * Spalte 2, Zeile 42 - Spalte 3, Zeile 25 * ----- | 1 | |

Der vorliegende Recherchenbericht wurde für alle Patentansprüche erstellt.

| Recherchenort DEN HAAG | Abschlußdatum der Recherche 27-05-1986 | Prüfer SONIUS M.E. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82